# EUROPEAN PATENT APPLICATION

(11) **EP 2 605 105 A2**
(43) Date of publication of application: **19.06.2013**
(21) Application number: 12197336.6
(22) Date of filing: 14.12.2012
(51) Int. Cl.: G06F 1/32, G06F 9/44

(54) **Mobile electronic devices utilizing reconfigurable processing techniques to enable higher speed applications with lowered power consumption**

(30) Priority: 16.12.2011 US 201161576846 P; 02.02.2012 US 201213365090
(71) Applicant: SRC Computers, LLC, Colorado Springs, CO 80907 (US)
(72) Inventor: Huppenthal, Jon M., Colorado Springs, CO 80908 (US); Seeman, Thomas R., Colorado Springs, CO 80919 (US); Hammes, Jeffrey, Colorado Springs, CO 80919 (US); Guzy, D. James, Glenbrook, NV 89413 (US)
(74) Representative: Style, Kelda Camilla Karen

(57) **Abstract**

Disclosed herein are mobile electronic devices utilizing reconfigurable processing techniques to enable higher speed applications with lowered power consumption for, inter alia, increased device battery life. The techniques disclosed herein enable greatly enhanced compression/decompression as well as encryption and decryption functionality to be provided in addition to overall greater processing capability particularly in those applications wherein minimization of power consumption is desired. Package-on-package and other assembly techniques may be used to provide the reconfigurable processor in a small footprint package.

## Description

### CROSS REFERENCE TO RELATED PATENT APPLICATIONS

The present invention is related to, and claims priority from, United States Provisional Patent Application Serial No.: 61/576,846 filed December 16, 2011, the disclosure of which, inclusive of all patents and patent applications cited therein, is herein specifically incorporated by this reference in its entirety.

### BACKGROUND OF THE INVENTION

The present invention relates, in general, to the field of mobile electronic devices. More particularly, the present invention relates to mobile electronic devices utilizing reconfigurable processing techniques to enable higher speed applications with lowered power consumption for, *inter alia,* increased battery life. The techniques disclosed herein are also applicable to implantable medical devices and other portable electronic systems especially those applications wherein minimization of power consumption and increased computational power is desired.

Today's mobile devices are very limited in computational capability due to the desire to have long battery life, small physical size and be light in weight. As a result the software applications that can be performed by such a device are inherently limited. This has led to a "reach back" model of computation involving the "cloud" computing model. Unfortunately as more and more streaming activities such as Netflix^{™} come on line, the ability to access bandwidth to the cloud will also become very limited. For example, it has been reported that Netfix already consumes 30% of all internet bandwidth between 6 and 9 PM. It is therefore apparent that it would not require much additional usage by cloud providers or other streaming media services in order to render the mobile reach back model effectively non-functional.

In order to address this situation, mobile device manufacturers are attempting to incorporate a very low power consumption microprocessor as the primary processor along with a higher power consumption and slightly higher capability applications processor. While this does provide a somewhat improved mobile processing capability, the gains are relatively minimal.

### SUMMARY OF THE INVENTION

A more efficacious solution is to incorporate reconfigurable processing capability into future mobile devices. Reconfigurable processors have been shown to consume as little as 1% of an equivalent performing microprocessor solution allowing the performance of the previously mentioned applications processor to be exceeded by a factor of 100 while consuming the same amount of power. In this regard the IMPLICIT+EXPLICIT^{™} Architecture available from SRC Computers LLC, assignee of the present invention, supports just such a configuration and allows for the programming of the mobile device to still be performed using standard high level programming languages.

One method of implementation using this architecture would be that of Package-on-Package (PoP) assembly. This commonly used mobile device assembly technique stacks one ball grid array device on top of another creating a footprint no larger than the bottom component. In mobile devices it is common to stack memory on top of the microprocessor. Since SRC Computer LLC's patented architecture interconnect a reconfigurable device and a microprocessor together through a shared memory, it can be seen that extending the PoP assembly to also include a reconfigurable layer would allow the SRC MAP^{®} architecture to be implemented in a fashion usable in a mobile device.

Other possible assemblies for implementation of the reconfigurable computing architecture disclosed herein include, for example, stacked die connected by means of trough silicon vias (TSV), 2.5D assemblies utilizing fine-pitch interposers and other known multiple integrated circuit die packaging techniques. Further, the reconfigurable computing architecture of the present invention may also be implemented in a configuration wherein the reconfigurable logic and microprocessor are formed on a single integrated circuit die.

Mobile devices having the significantly higher computational capability reconfigurable processing provides would also have several concomitant cost and performance benefits as well as open new applications domains not currently contemplated with these devices. First, web sites would no longer have to maintain both a standard version and a mobile version providing immediate savings of many millions of dollars annually. Further, with a more computationally capable mobile device more complex data compression/decompression techniques could be employed allowing much more data to be sent to the mobile device utilizing the same amount of bandwidth as used today.

Secondly, with the ability to perform significantly more secure encryption algorithms that reconfigurable computing provides, the mobile device could then become the user's primary repository of secure data. Physical credit cards could be eliminated and instead replaced by 2D bar codes on the device display thus greatly reducing credit card fraud caused by giving access to a physical card by the individual performing the transaction. The mobile device could also be used in a highly secure wireless mode, whereupon entering a store for example, to allow sensors located there to know of the buyer's presence, previous desired products, current purchasing limits and the like.

Such enhanced mobile encryption capability would also allow the user to retain sensitive data such as medical records on their person which could prove to be very beneficial in the case of a medical emergency or accident while traveling. In another application, electronic car keys could be replaced by encrypted codes loaded into the mobile device.

Thirdly, with the mobile device becoming the principal audio and video media device for many users, significantly higher processing capability would greatly improve these applications as well. For instance one could have the ability to remove the motion blur common in cell phone photos due to limited flash range and slow shutter speeds. Moreover, many of the basic image processing functions performed today such as "red eye" elimination could now be performed on full motion video as well. Audio compression techniques currently in use could also be greatly enhanced without the need to pre-process the audio in non-real time. Still further, the reconfigurable processing techniques disclosed herein are likewise applicable to mobile gaming applications allowing for the provision of improved overall game performance and optimal performance at different points in the game.

It is noted that applications in current Android^{™} (trademark of Google, Inc.) devices are written in Java^{™} (trademark of Oracle Corporation). This allows the applications to be portable between all Android devices without requiring that they utilize the same processor. This is accomplished because each processor executes code that is a virtual Java processor which, in turn, then executes the application. The result is portability but at the cost of about four times lower performance than the equivalent C code. This is because the instruction processor has been constructed in software as opposed to hardware. Utilizing the reconfigurable processing techniques disclosed herein the Java code could instead be instantiated in reconfigurable logic such as an FPGA resulting in the elimination of the current processor emulation slow down. The result is Java portability with hardware execution speed.

Disclosed herein is a mobile device incorporating the reconfigurable processing technique of the present invention that instantiates a Java Virtual Machine in reconfigurable logic to eliminate the performance degradation observed when implementing the Java Virtual Machine on a microprocessor. In conjunction with the present invention, a compiler is disclosed which takes applications and generates code suitable for being run on a mobile device comprising reconfigurable processors. The compiler disclosed herein is further operable to take Java applications in particular and alter the code, or be taken in the form of byte code, such that it can be run on a mobile device comprising reconfigurable processors.

Particularly disclosed herein is a mobile device incorporating reconfigurable computing. In a particular embodiment of the present invention the reconfigurable processing capability of the mobile device enables greater computational capability for accessing web sites and allowing for the use of complex data compression and data encryption techniques. The reconfigurable processing technique for mobile devices of the present invention further enables a mobile device to contain secure user medical or other personal information while also providing for potential use as an automotive ignition or other access key.

Other possible applications of the reconfigurable processing technique of the present invention include enabling a mobile device to provide enhanced computational capability to allow for improved audio and video quality through enhanced image processing techniques. Such improved on-board image processing can then provide real-time video to the mobile device including high definition video. In a particular implementation of the reconfigurable processing technique of the present invention, implicit and explicit logic can be utilized in the form of a dense logic device and direct execution logic coupled to a shared memory in accordance with SRC Computers' IMPLICIT+EXPLICIT^{™} Architecture.

According to an aspect, there is provided a mobile device comprising reconfigurable logic; a memory system coupled to said reconfigurable logic; and microprocessor logic also coupled to said memory device.

The mobile device may further comprise a battery coupled to provide operating power to said reconfigurable logic, said memory system and said microprocessor logic.

The reconfigurable logic may be operable with said microprocessor logic to provide at least one of a voice recognition, graphics rendering, encryption, decryption, I/O interface, image processing, audio and/or video compression and/or decompression or secondary microprocessor function.

The mobile device may further comprise a display coupled to said microprocessor logic.

The mobile device may further comprise a speaker coupled to said microprocessor logic.

The mobile device may further comprise an input device coupled to said microprocessor logic.

The input device may comprise at least one of a microphone, keypad and/or touch screen.

The mobile device may further comprise an antenna for reception and transmission of data to/from said mobile device.

The mobile device may comprise a cellular telephone.

The mobile device may be capable of functioning as at least one of a secure credit card, personal information and/or medical information repository and/or game device.

The mobile device may be capable of functioning as a vehicle ignition and/or access key.

The reconfigurable logic, said memory system and said microprocessor logic may comprise stacked die.

The reconfigurable logic, said memory system and said microprocessor logic may be in a package-on-package configuration.

The reconfigurable logic, said memory system and said microprocessor logic may be in a 2.5D package configuration.

The reconfigurable logic and said microprocessor logic may be integrated on a single die.

The reconfigurable logic may instantiate a Java Virtual Machine.

According to another aspect, there is provided a mobile device comprising a direct execution logic block; a dense logic device; and a memory system coupled to said direct execution logic block and said dense logic device.

The mobile device may further comprise a battery coupled to provide operating power to said direct execution logic block, said dense logic device and said memory.

The direct execution logic block may be operable with said dense logic device to provide at least one of a voice recognition, graphics rendering, encryption, decryption, I/O interface, image processing, audio and/or video compression and/or decompression or secondary microprocessor function.

The mobile device may further comprise a display coupled to said dense logic device.

The mobile device may comprise a speaker coupled to said dense logic device.

The mobile device may further comprise an input device coupled to said dense logic device.

The input device may comprise at least one of a microphone, keypad and/or touch screen.

The mobile device may further comprise an antenna for reception and transmission of data to/from said mobile device.

The mobile device may comprise a cellular telephone.

The mobile device may be capable of functioning as at least one of a secure credit card, personal information and/or medical information repository and/or game device.

The mobile device may be capable of functioning as a vehicle ignition and/or access key.

The direct execution logic block, said memory system and said dense logic device may comprise stacked die.

The direct execution logic block, said memory system and said dense logic device may be in a package-on-package configuration.

The direct execution logic block, said memory system and said dense logic device may be in a 2.5D package configuration.

The direct execution logic block and said dense logic device may be integrated on a single die.

The direct execution logic block may instantiate a Java Virtual Machine.

According to a further aspect, there is provided a mobile device comprising a programmable logic device; a memory system coupled to said programmable logic device; and microprocessor logic also coupled to said memory device.

The mobile device may further comprise a battery coupled to provide operating power to said programmable logic device, said memory system and said microprocessor logic.

The programmable logic device may be operable with said microprocessor logic to provide at least one of a voice recognition, graphics rendering, encryption, decryption, I/O interface, image processing, audio and/or video compression and/or decompression or secondary microprocessor function.

The mobile device may further comprise a display coupled to said microprocessor logic.

The mobile device may further comprise a speaker coupled to said microprocessor logic.

The mobile device may further comprise an input device coupled to said microprocessor logic.

The input device may comprise at least one of a microphone, keypad and/or touch screen.

The mobile device may further comprise an antenna for reception and transmission of data to/from said mobile device.

The mobile device may comprise a cellular telephone.

The mobile device may be capable of functioning as at least one of a secure credit card, personal information and/or medical information repository and/or game device.

The mobile device may be capable of functioning as a vehicle ignition and/or access key.

The programmable logic device, said memory system and said microprocessor logic may comprise stacked die.

The programmable logic device, said memory system and said microprocessor logic may be in a package-on-package configuration.

The programmable logic device, said memory system and said microprocessor logic may be in a 2.5D package configuration.

The programmable logic device and said microprocessor logic may be integrated on a single die.

The programmable logic device may comprise an FPGA.

The programmable logic device may instantiate a Java Virtual Machine.

According to a further aspect, there is provided a method for implementing a mobile device incorporating reconfigurable logic, said method comprising providing application code for said mobile device; compiling said application code; and generating code capable of implementation in said reconfigurable logic from said compiled application code.

The step of providing said application code may comprise providing Java application code.

The steps of compiling and generating may comprise the step of altering said Java application code for implementation in said reconfigurable logic.

The step of providing Java application code comprises providing said Java application code in byte code form.

### BRIEF DESCRIPTION OF THE DRAWINGS

The aforementioned and other features and objects of the present invention and the manner of attaining them will become more apparent and the invention itself will be best understood by reference to the following description of a preferred embodiment taken in conjunction with the accompanying drawings, wherein:
Fig. 1 is a functional block diagram of the internal logic circuitry of a mobile device as may be currently implemented utilizing conventional processing by dedicated logic;
Fig. 2 is a functional block diagram of a mobile device as may be implemented in accordance with the technique of the present invention wherein reconfigurable logic is utilized to replace some or all of the processing functions illustrated in the preceding figure;
Fig. 3 is a high level block diagram of a representative embodiment of a programming system for possible implementation of the mobile device of the preceding figure in the form of an IMPLICIT + EXPLICT^{™} architecture;
Fig. 4 is a representative code development process for generating a single unified executable for the microprocessor logic and reconfigurable logic of Fig. 2;
Fig. 5 is a simplified exploded view of a possible physical implementation of the functional elements of the mobile device of Fig. 2 comprising stacked die for utilization in accordance with one embodiment of the present invention;
Fig. 6 is a cut-away side elevational view of another possible implementation of the functional elements of the mobile device of Fig. 2 comprising a package-on-package configuration for utilization in a mobile application in accordance with another embodiment of the present invention;
Fig. 7 is a further cut-away side elevational view of yet another possible implementation of the functional elements of the mobile device of Fig. 2 comprising a 2.5D configuration implemented with an interposer for utilization in a mobile application in accordance with yet another embodiment of the present invention;
Fig. 8 is an illustration representing the current state of the art in a representative application of a conventional mobile system for enabling access to a vehicle from a mobile device; and
Fig. 9 is a corresponding illustration of a mobile system in which a mobile device implemented with reconfigurable processing in accordance with the technique of the present invention can communicate to the vehicle through a cell tower or directly without the interaction of the cell service provider.

### DESCRIPTION OF A REPRESENTATIVE EMBODIMENT

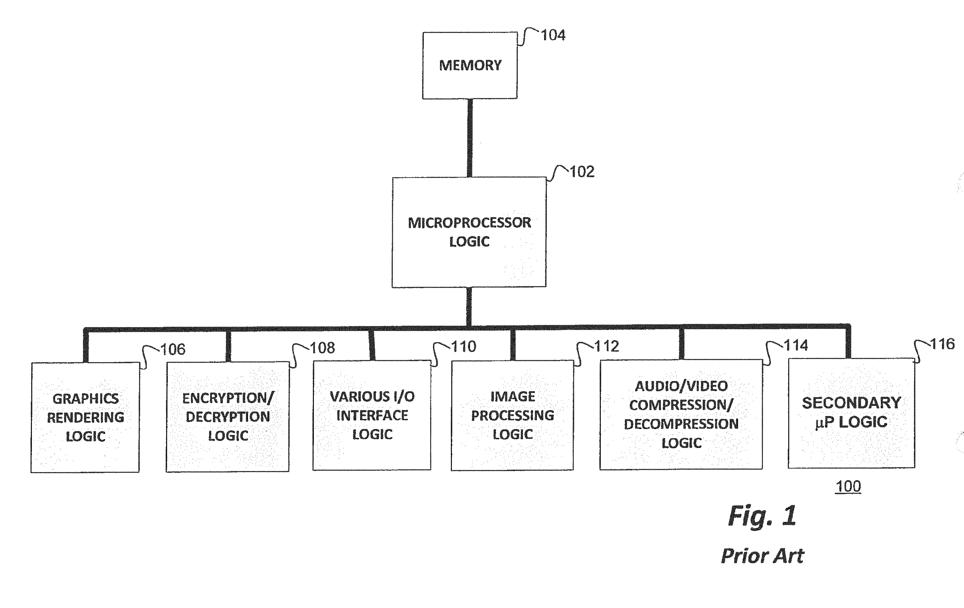

With reference now to Fig. 1, a functional block diagram of the internal logic circuitry of a mobile device 100 is shown as may be currently implemented utilizing conventional processing by dedicated logic. The mobile device 100 comprises, in pertinent part, a microprocessor logic device 102 which can be furnished as a commercially available microprocessor unit (MPU), central processing unit (CPU), microcontroller (MCU), digital signal processor (DSP) or similar device. The microprocessor logic device 102 is coupled to an external memory 104 for read/write access thereto.

The microprocessor device 102 is further coupled to a system interconnect to which may be attached individual or separately packaged logic devices such as graphics rendering logic 106, encryption/decryption logic 108, interface logic for various input/output (I/O) devices 110, image processing logic 112, audio/video compression/decompression logic 114, secondary microprocessor (µP) logic 116 and the like depending on the mobile device 100 function and features. Each of these separate devices individually, and collectively, places demands on the mobile device 100 power supply and, as such, may have to be of diminished functionality in order not to deplete any on-board battery power too quickly.

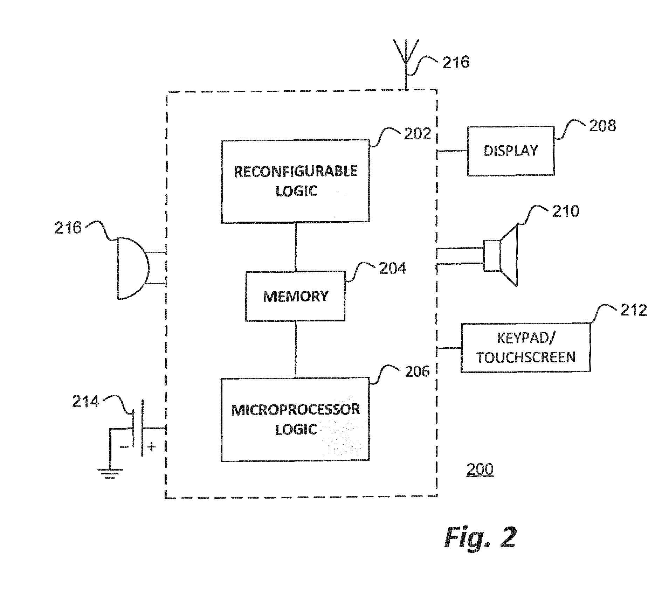

With reference additionally now to Fig. 2, a functional block diagram of a mobile device 200 as may be implemented in accordance with the technique of the present invention is shown wherein reconfigurable logic is utilized to replace some or all of the separate processing functions illustrated in the preceding figure. The mobile device 200 comprises reconfigurable logic 202 which shares memory 204 with microprocessor logic 206, with the reconfigurable logic 202 capable of performing all of the functionality of the separate logic 106 through 116 inclusive of the preceding figure.

As illustrated, the mobile device 200 may also include a user viewable display 208, a speaker 210, a keypad and/or touchscreen 212 for input of data or commands to the mobile device 200, an on-board battery 214 or other power supply and an antenna 216 for transmission or reception of signals external to the mobile device 200. The mobile device 200 may also include a microphone 216 for use in conjunction with the transmission or reception of external signals, for example, in conjunction with a cellular phone feature and/or the input of voice commands to the mobile device 200 itself with the mobile device incorporating a voice recognition function. Briefly, the mobile device 200 may have all of the features of a conventional smart phone, personal digital assistant or any other mobile device.

Representative embodiments for possible implementations of the reconfigurable logic 202, shared memory 204 and microprocessor logic 206 and programming techniques therefor are disclosed in one or more of the following United States Patents issued to SRC Computers LLC, assignee of the present invention, the disclosures of which are herein specifically incorporated by this reference in their entirety: 6,026,459; 6,076,152; 6,247,110; 6,295,598; 6,339,819; 6,356,983; 6,434,687; 6,594,736; 6,836,823; 6,941,539; 6,961,841; 6,964,029; 6,983,456; 6,996,656; 7,003,593; 7,124,211; 7,134,120; 7,149,867; 7,155,602; 7,155,708; 7,167,976; 7,197,575; 7,225,324; 7,237,091; 7,299,458; 7,373,440; 7,406,573; 7,421,524; 7,424,552; 7,565,461; 7,620,800; 7,680,968; 7,703,085; and 7,890,686.

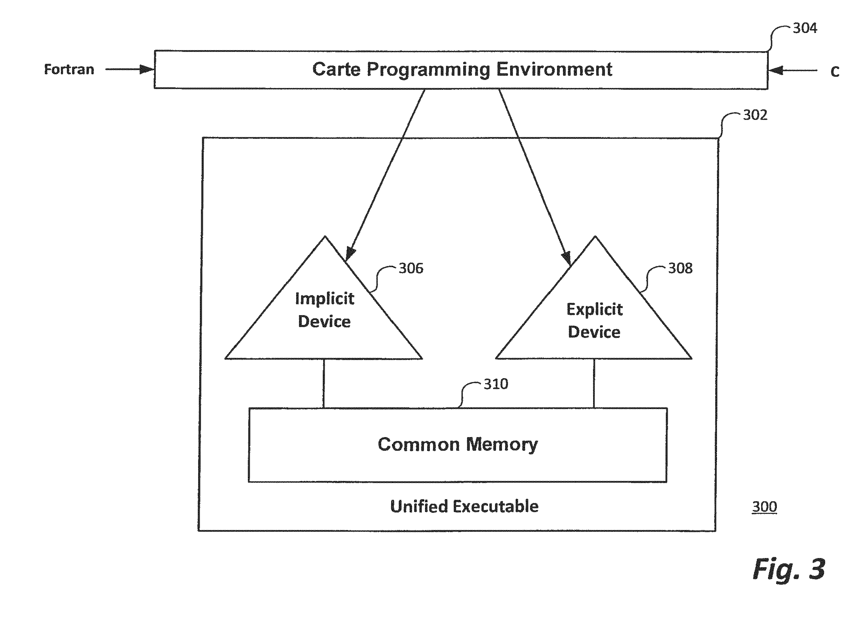

With reference now to Fig. 3, a high level block diagram of a representative embodiment of a programming system 300 for possible implementation of the mobile device 200 (Fig. 2) in accordance with the present invention is shown in the form of an IMPLICIT+EXPLICT^{™} architecture (trademark of SRC Computers LLC).

The system 300 comprises, in pertinent part, a unified executable 302 produced through SRC Computers' Carte^{™} programming environment 304 which allows for application source files being input in, for example, the Fortran or C programming languages. An implicit device 306 and explicit device 308 are programmed through the Carte programming environment, which will be more fully described hereinafter and both are coupled to provide access to a common memory 310. In this regard, the implicit device 306 corresponds to the microprocessor logic 206 (Fig.2), the explicit device 308 corresponds to the reconfigurable logic 202 (Fig. 2) and the common memory 310 corresponds to the shared memory 204 (Fig. 2).

In this architecture, the explicit and implicit processors 306, 308 are peers with respect to their ability to access system memory contents in the form of common memory 310. In this fashion, overhead associated with having both types of processors working together on the same program is minimized. This allows the SRC Computers' Carte programming tools to utilize whichever processor type is best for a given portion of the overall application without concern for control handoff penalties.

The implicit devices 306 may also be referred to as Dense Logic Devices (DLDs) and encompass a family of components that includes microprocessors, digital signal processors, Graphics Processor Units (GPUs), as well as some Application Specific Integrated Circuits (ASICs). These processing elements are all implicitly controlled and typically are made up of fixed logic that is not altered by the user. These devices execute software-directed instructions on a step-by-step basis in fixed logic having predetermined interconnections and functionality.

On the other hand, the explicit devices 308 may also be referred to as Direct Execution Logic (DEL) and comprise a family of components that is explicitly controlled and is typically reconfigurable. This includes Field Programmable Gate Arrays (FPGAs), Field Programmable Object Arrays (FPOAs) and Complex Programmable Logic Devices (CPLDs). This set of elements enables a program to establish an optimized interconnection among the selected functional units in order to implement a desired computational, pre-fetch and/or data access, functionality for maximizing the parallelism inherent in the particular code.

Both the implicit device 306 (DLD) and explicit device 308 (DEL) processing elements are interconnected as peers to a shared system memory (e.g. common memory 310) in one fashion or another and it is not required that interconnects support cache coherency since data sharing can be implemented in an explicit fashion.

The DEL computing of the explicit device 308 uses dynamic logic, which conforms to the application rather than forcing the application into a fixed microprocessor architecture where one size must fit all. This delivers the most efficient circuitry for any particular code in terms of the precision of the functional units and the parallelism that can be found in the code. The result is a dynamic application specific processor that can evolve along with a given code and/or can be reprogrammed in a fraction of a second to handle different codes. DEL computing provides users the performance of a special purpose computer and the economy of a general-purpose machine.

The Carte Programming Environment makes this integration possible by enabling the programmer to utilize ANSI standard languages such as Fortran or C high-level languages to specify their application on both the implicit and explicit devices 306, 308. The output from compilation in the Carte Programming Environment is a single, unified executable for the target heterogeneous computer system such as mobile device 200 (Fig. 2). Note that the explicit devices may have their own programming idiom in that while using an ANSI standard computer language, the explicit devices utilize expressions within that language distinct from the expressions utilized in the implicit device program.

In some currently available heterogeneous computer systems, a low bandwidth and high latency input/output bus separates the FPGA device from the CPU. The SRC IMPLICIT+EXPLICIT Architecture removes this limitation by enabling the DLD and DEL processors to operate as peers with respect to the system memory. This means only system memory bandwidth and latency limits these devices, which greatly improves overall application performance on the system. The unified programming environment using standard languages and the implicit and explicit devices 306, 308 limited only by system memory 310 characteristics of the IMPLICIT+EXPLICIT Architecture, provides the user with an easy-to-use high-performance application platform unmatched by any system available today.

The IMPLICIT+EXPLICIT Architecture allows users to execute existing code, or easily recompile and develop new codes to take advantage of the power of the reconfigurable DEL processors in the system. This hardware and software architecture fully integrates microprocessor technology and reconfigurable DEL processors to deliver orders of magnitude increases in performance and reductions in power consumption. The SRC Carte Programming Environment eliminated the historic problems that programmers faced in getting microprocessor portions of code to work with reconfigurable processor portions,

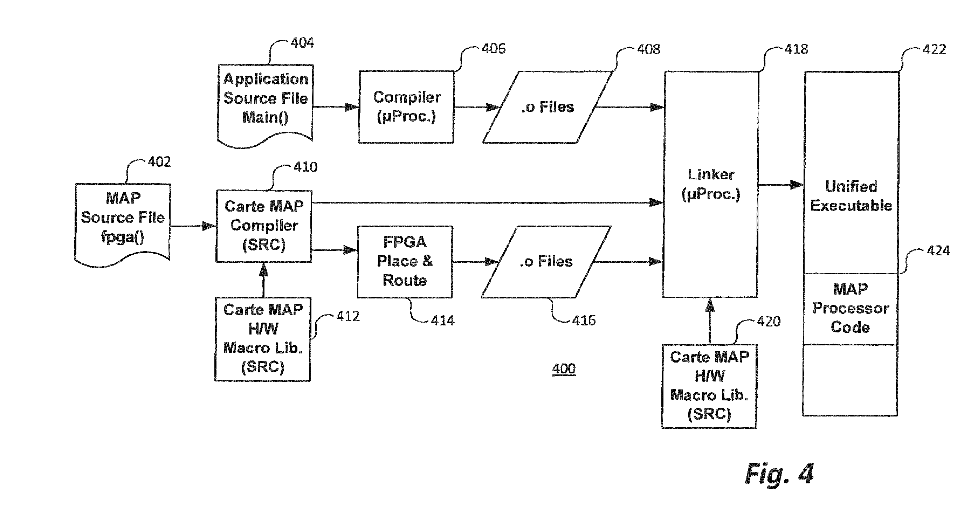

With reference additionally now to Fig. 4, a representative code development process 400 is shown for generating a single unified executable targeting a dense logic device such as microprocessor logic 206 and a direct execution logic device such as reconfigurable logic 202 (Fig. 2). The process 400 begins with the input of the reconfigurable logic 202 (e.g. a MAP^{®} processor, a trademark of SRC Computers LLC) source files 402 and application source files 404, the latter being compiled by the microprocessor compiler at step 406 to produce object files 808 in a conventional manner.

In this case, the Carte compiler 410 receives the source files 402, uses the hardware version of the Carte macro libraries 412 and invokes the FPGA place and route tools 414 in order to generate an FPGA bit stream. This bit stream is included in the object file output 416 by the Carte compiler 410. All object files 408 and 416 are linked at step 418 with the hardware macro library symbols 420 being resolved, using the Carte libraries. In this way, the FPGA programming bit stream and the runtime code 424 is embedded within the single unified application executable 422. It is also possible for programmers to incorporate their own Verilog or VHDL IP into these libraries. This allows them to instantiate the IP by using a simple function call.

The programming software comprises two major elements: standard third party software and the SRC Carte Programming Environment. The mobile device 200 (Fig. 2) can be implemented utilizing standards-based software such as a Linux Fedora operating system forming the base systems software. Compilers, debuggers and software management tools supported within Linux can be used and interfaced with the Carte Programming Environment. Some of the tools may include the Intel® Fortran Compiler; the Intel® C++ Compiler and/or the Altera Quartua® II FPGA design software. The Linux operating system (OS) environment also allows access to a multitude of drivers and libraries that support peripheral storage and networking.

The Carte Programming Environment takes applications written in standard ANSI Fortran and/or C and seamlessly integrates the computational capability of the reconfigurable logic 202 and microprocessor logic 206 (Fig. 2) into a single unified executable. More specifically, the Carte Programming Environment allows the programmer to explicitly define concurrent execution of code within a microprocessor/FPGA heterogeneous system while providing explicit data management within the memory hierarchy. The programmer is given the ultimate access to low-level hardware capabilities including the definition and creation of processor hardware from within high-level programming languages. This level of control over compute and memory access greatly facilitates achieving high computational performance.

Although the Carte Programming Environment is comprised of several components, the major software component is the SRC MAP processor compiler, which is currently available as a MAP/Fortran compiler or a MAP/C compiler. The MAP compiler creates the direct execution logic for the MAP FPGAs. The compilation system extracts maximum parallelism from the code and generates pipelined hardware logic instantiated in the FPGAs. The compiler generates all the required interface code to manage the movement of data to and from the MAP processor, and to coordinate microprocessor execution with the logic running in the MAP processor. The libraries fully support integer, single and double precision floating point data types.

All of the required interface and management code is contained in the Carte runtime libraries. The SNAP™ (trademark of SRC Computers LLC) driver and the associated libraries are provided with the Carte Programming Environment, allowing the application developer to easily design and implement their algorithms in a fully integrated manner. The Carte Programming Environment also provides users with the ability to emulate and simulate compiled code in "debug mode". Debug mode compilation allows the user to compile and test all of their code on the CPU without invoking the FPGA place and route tools. Loop performance information is also provided in debug mode, which enables accurate MAP processor code performance estimation before FPGA place and route.

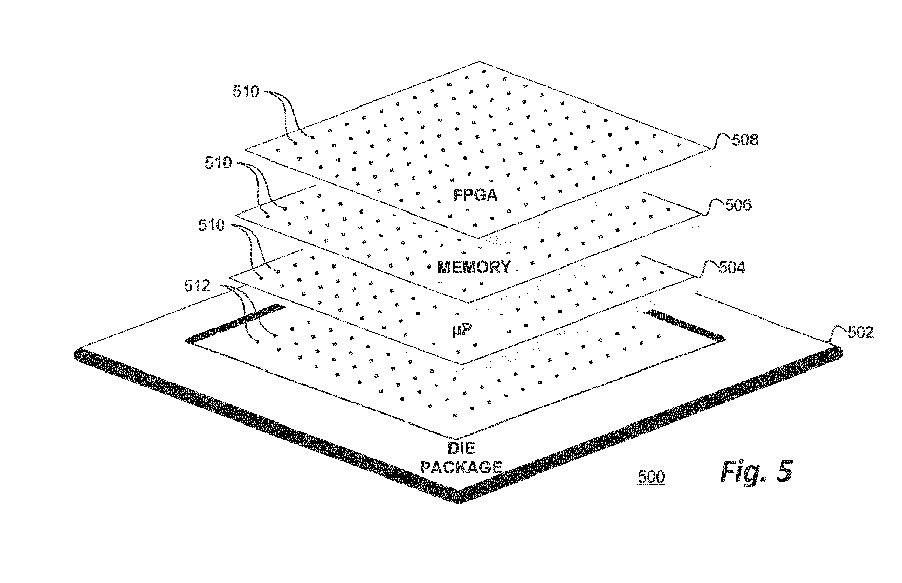

With reference additionally now to Fig. 5, a simplified exploded view of a possible physical implementation of the functional elements of the mobile device of Fig. 2 is shown comprising stacked die 500 for utilization in a mobile application in accordance with one embodiment of the present invention. The stacked die 500 comprises a die package 502 to which a microprocessor 504 (e.g. microprocessor logic 206), memory 506 (e.g. memory 204) and FPGA 508 (e.g. reconfigurable logic 203) are physically and electrically coupled by means of through-die electrical connectors 510 (e.g. through silicon vias [TSVs]) and contacts 512.

Representative implementations and the process for producing possible embodiments of the stacked die 500 are disclosed in one or more of the following United States Patents issued to Arbor Company LLP, the disclosures of which are herein specifically incorporated by this reference in their entirety: 6,627,985; 6,781,226; 7,126,214; 7,282,951 and RE42,035.

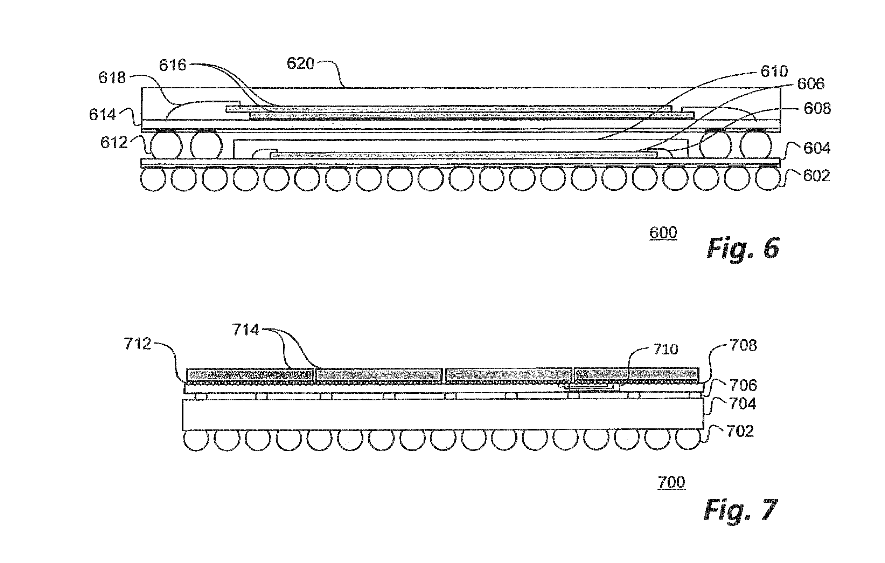

With reference additionally now to Fig. 6, a cut-away side elevational view of another possible implementation of the functional elements of the mobile device of Fig. 2 is shown comprising a package-on-package (PoP) 600 configuration for utilization in a mobile application in accordance with another embodiment of the present invention.

The package-on-package 600 comprises a series of high density ball grid array (BGA) contacts 602 for coupling the PoP 600 to a circuit board. The contacts 602 are affixed to a laminate substrate 604 which supports either a single or multiple integrated circuit die element(s) 606 such as the microprocessor logic 206 of Fig. 2. A number of wirebonds 608 electrically couple the die element(s) 606 to the contacts 602. The die element(s) 606 and wirebonds 608 are contained within encapsulation 610.

The PoP 600 further comprises a number of lower density BGA contacts 612 which are affixed to another laminate substrate 614 which also supports one or more integrated circuit die element(s) 616. In this regard, the die element(s) 616 may comprise, for example, the memory 204 and reconfigurable logic 202 of the mobile device of Fig. 2. The die element(s) 616 comprising memory 204 and reconfigurable logic 202 may be stacked as shown in the preceding Fig. 5 or may be separately encapsulated from one another as the die element(s) 606. A number of wirebonds 618 electrically couple the die element(s) 616 to the contacts 612 and both are contained within encapsulation 620. It should also be noted that the integrated circuit die element(s) 606 can comprise the reconfigurable logic 202 and microprocessor logic 206 formed together on a common substrate as can any of the die element(s) 616.

With reference additionally now to Fig. 7, a further cut-away side elevational view of yet another possible implementation of the functional elements of the mobile device of Fig. 2 is shown comprising a 2.5D 700 configuration implemented with an interposer for utilization in a mobile application in accordance with yet another embodiment of the present invention.

The 2.5D 700 configuration comprises a number of BGA solder ball contacts 702 and a package substrate 704 having a number of interconnections therethrough to another number of smaller solder bumps 706. The solder bumps 706 support an interposer 708 and are electrically coupled through TSVs (not shown) to a number of high-bandwidth, low-latency interconnections 710 formed in the interposer 708. The interconnections 710 are, in turn, coupled to a number of microbumps 712 which provide electrical connection to various integrated circuit die 714. In this regard, any of the integrated circuit die 714 can comprise the reconfigurable logic 202, memory 204 and/or microprocessor logic 206 of the mobile device 200 of Fig. 2. In addition, any of the integrated circuit die 714 can comprise the reconfigurable logic 202 and microprocessor logic 206 integrated on a common substrate.

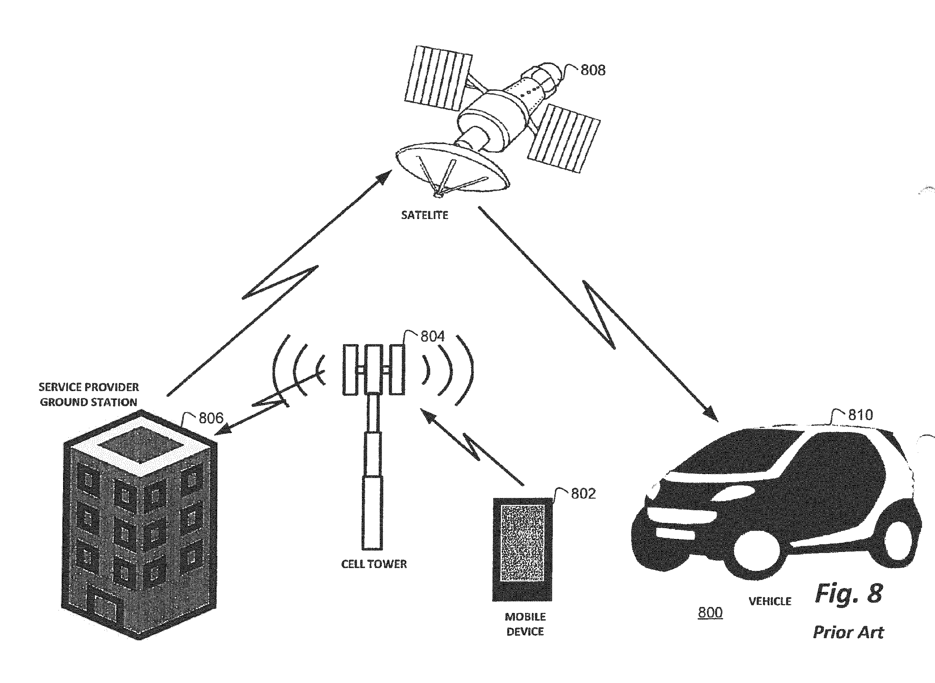

With reference additionally now to Fig. 8, an illustration representing the current state of the art in a representative application of a conventional mobile system 800 is shown for enabling access to a vehicle from a conventional mobile device 802. In order for the conventional mobile device 802 to communicate with a vehicle 810, given the inherent processing limitations and available power supply of the mobile device 802, the mobile device 802 must first communicate with a cell tower 804. The cell tower 804, in turn, communicates with the service provider ground station 806 which then relays signals through a satellite 808 to the vehicle 810.

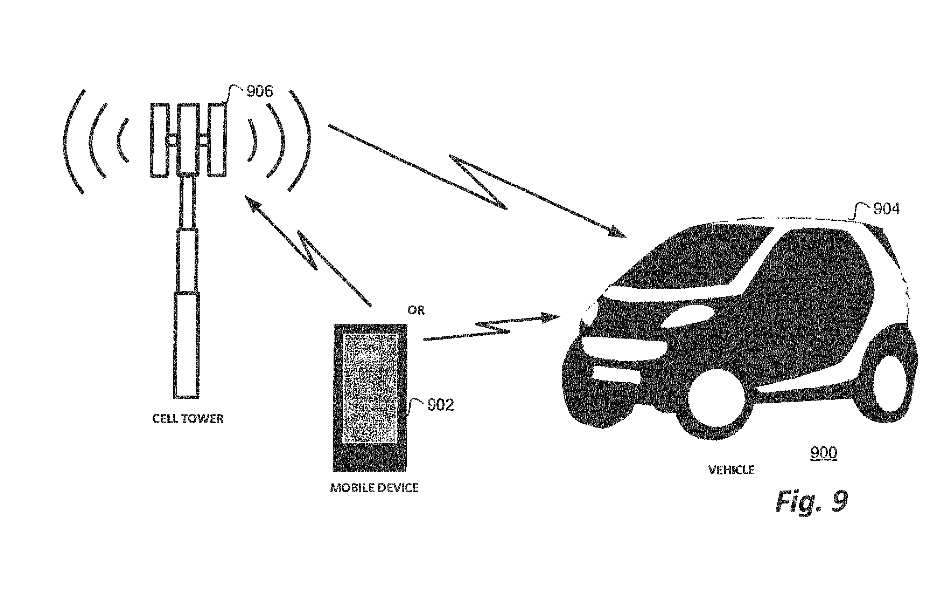

With reference additionally now to Fig. 9, a corresponding illustration of a mobile system 900 is shown in which a mobile device 902 implemented with reconfigurable processing in accordance with the technique of the present invention can communicate to the vehicle 904 through a cell tower 906 or directly without the interaction of the cell service provider.

While there have been described above the principles of the present invention in conjunction with specific apparatus, device configurations and programming environments, it is to be clearly understood that the foregoing description is made only by way of example and not as a limitation to the scope of the invention. Particularly, it is recognized that the teachings of the foregoing disclosure will suggest other modifications to those persons skilled in the relevant art. Such modifications may involve other features which are already known per se and which may be used instead of or in addition to features already described herein. Although claims have been formulated in this application to particular combinations of features, it should be understood that the scope of the disclosure herein also includes any novel feature or any novel combination of features disclosed either explicitly or implicitly or any generalization or modification thereof which would be apparent to persons skilled in the relevant art, whether or not such relates to the same invention as presently claimed in any claim and whether or not it mitigates any or all of the same technical problems as confronted by the present invention. The applicants hereby reserve the right to formulate new claims to such features and/or combinations of such features during the prosecution of the present application or of any further application derived therefrom.

As used herein, the terms "comprises", "comprising", or any other variation thereof, are intended to cover a non-exclusive inclusion, such that a process, method, article, or apparatus that comprises a recitation of certain elements does not necessarily include only those elements but may include other elements not expressly recited or inherent to such process, method, article or apparatus. None of the description in the present application should be read as implying that any particular element, step, or function is an essential element which must be included in the claim scope and THE SCOPE OF THE PATENTED SUBJECT MATTER IS DEFINED ONLY BY THE CLAIMS AS ALLOWED. Moreover, none of the appended claims are intended to invoke paragraph six of 35 U.S.C. Sect. 112 unless the exact phrase "means for" is employed and is followed by a participle.

## Claims

1. A mobile device comprising:
reconfigurable logic;
a memory system coupled to said reconfigurable logic; and
microprocessor logic also coupled to said memory device.

2. The mobile device of claim 1 wherein said mobile device further comprises:
a battery coupled to provide operating power to said reconfigurable logic, said memory system and said microprocessor logic.

3. The mobile device of claim 1 or 2 wherein said reconfigurable logic is operable with said microprocessor logic to provide at least one of a voice recognition, graphics rendering, encryption, decryption, I/O interface, image processing, audio and/or video compression and/or decompression or secondary microprocessor function.

4. The mobile device of claim 1, 2 or 3 further comprising one or more of:
a display coupled to said microprocessor logic;
a speaker coupled to said microprocessor logic; and
an input device coupled to said microprocessor logic.

5. The mobile device of claim 4 wherein said input device comprises at least one of a microphone, keypad and/or touch screen.

6. The mobile device of any preceding claim further comprising an antenna for reception and transmission of data to/from said mobile device.

7. The mobile device of any preceding claim wherein said mobile device comprises a cellular telephone.

8. The mobile device of any preceding claim wherein said mobile device is capable of functioning as at least one of a secure credit card, personal information and/or medical information repository and/or game, and as a vehicle ignition and/or access key.

9. The mobile device of any preceding claim wherein said reconfigurable logic, said memory system and said microprocessor logic comprise stacked die.

10. The mobile device of any preceding claim wherein said reconfigurable logic, said memory system and said microprocessor logic are in a package-on-package configuration.

11. The mobile device of any preceding claim wherein said reconfigurable logic, said memory system and said microprocessor logic are in a 2.5D package configuration.

12. The mobile device of any preceding claim wherein said reconfigurable logic and said microprocessor logic are integrated on a single die.

13. The mobile device of any preceding claim wherein said reconfigurable logic instantiates a Java Virtual Machine.

14. A method for implementing a mobile device incorporating reconfigurable logic, said method comprising:
providing application code for said mobile device;
compiling said application code; and
generating code capable of implementation in said reconfigurable logic from said compiled application code.

15. The method of claim 14 wherein said step of providing said application code comprises:
providing Java application code.

16. The method of claim 16 wherein said steps of compiling and generating comprise the step of:
altering said Java application code for implementation in said reconfigurable logic.

17. The method of claim 15 or 16 wherein said step of providing Java application code comprises:
providing said Java application code in byte code form.
